# EUROPEAN PATENT APPLICATION

(11) **EP 4 712 240 A2**
(43) Date of publication of application: **18.03.2026**
(21) Application number: 26154464.7
(22) Date of filing: 24.03.2016
(51) Int. Cl.: H01M 50/296

(54) **AN ELECTRICAL MODULE FOR A POWER TOOL AND A POWER TOOL**

(30) Priority: 27.03.2015 CN 201520179347 U
(62) Divisional of application: 22169642.0
(71) Applicant: Techtronic Outdoor Products Technology Limited, Hamilton HM12 (BM)
(72) Inventor: COLBER, William E., Lavonia GA, 30553 (US)
(74) Representative: Zimmermann & Partner Patentanwälte mbB

(57) **Abstract**

The invention is related to an electric module for use in a power tool comprising a housing and an electrical connection terminal. The housing defines a battery chamber which at least partly accommodates a battery assembly. The electrical connection terminal is disposed at the top portion within the housing. The electrical connection terminal is arranged to electrically connect with the battery assembly accommodated in the battery chamber. The housing prevents water and/or foreign matters in the battery chamber from contacting with the electrical connection terminal disposed at the top portion inside the housing. The invention allows the battery chamber exposing to the external through the opening without the necessity of including additional waterproof/enclosed units in the electric module for preventing water and/or foreign matters entering the battery chamber and contacting with the electrical connection terminal disposed at the top portion within the housing. The structure is simple, the production cost is low, and unnecessary units are reduced.

## Description

### Technical Field

The invention is related an electric module used in a power tool and a power tool, and more particularly, to an electric module used in a power tool and having a structure, which can prevent water and/or foreign matters entering the battery chamber from contacting with the electrical connection terminal used for connecting with the battery assembly.

### Related Art

In general, lawn mowers, croppers, grass mowers, weeders, portable croppers and self-propelled mowers are used outdoors, such as gardens, lawns and so. Due to different weathers or outdoor environments, such as windy, rainy weathers and so, rain and/or other foreign matters may enter the battery chamber and contact with the electrical connection terminal disposed inside the battery chamber, such that the electrical connection terminal will be oxidized, rusted or will lead to short circuit. A possible solution is including a waterproof enclosed unit for enclosing the battery chamber opening so as to prevent the rain and/or other foreign matters from entering the battery chamber, such that it may prevent the electrical connection terminal from being oxidized, rusted and so. However, the waterproof enclosed unit will cause assembling and disassembling become more inconvenient and the waterproof ability will become lost due to damages. Thus, the units cannot really solve the problem that outdoor power tools need to be protected from being damaged because of accumulated water and/or foreign matters.

### SUMMARY

Accordingly, the invention provides an electric module used in a power tool and a power tool for solving the above technical problem.

In accordance with a first aspect of the present invention, there is provided an electric module for use in a power tool comprising: a housing defining a battery chamber arranged to at least partly accommodating a battery assembly; and an electrical connection terminal disposed at a top portion within the housing; wherein the electrical connection terminal is arranged to electrically connect with the battery assembly accommodated in the battery chamber.

In an embodiment of the first aspect, the housing is arranged to prevent water and/or foreign matters in the battery chamber from contacting with the electrical connection terminal disposed at the top portion within the housing.

In an embodiment of the first aspect, the battery assembly is arranged to be inserted to the battery chamber via a battery chamber opening defined by the housing.

In an embodiment of the first aspect, when the battery chamber is empty, the battery chamber is exposed to an external environment through the battery chamber opening.

In an embodiment of the first aspect, the battery chamber opening is opened towards a direction parallel to an operating surface of the power tool.

In an embodiment of the first aspect, the electric module further comprises a battery frame, the battery frame is disposed at the top portion within the housing, and the battery frame is arranged to fix the position of the battery assembly accommodated in the battery chamber.

In an embodiment of the first aspect, the battery frame comprises the electrical connection terminal.

In an embodiment of the first aspect, the power tool is an outdoor power tool and/or a gardening tool.

In an embodiment of the first aspect, the power tool is at least one of a lawn mower, a cropper, a grass mower, a weeder, a portable cropper and a self-propelled mower.

In accordance with a first aspect of the present invention, there is provided a power tool comprising an electric module in accordance with the first aspect.

One of the advantages is that the electrical connection terminal is disposed at the top portion within the housing of the electric module, water and/or foreign matters entering the battery chamber through the battery chamber opening will be adhered to the bottom of the battery chamber due to gravity. The water and/or foreign matters substantially do not contact with the electrical connection terminal disposed at the top portion, such that the battery chamber can be exposed to external through the opening without assembling additional waterproof/enclosed unit to the electric module for preventing water and/or foreign matters from entering the battery chamber and contacting with the electrical connection terminal disposed inside the battery chamber. The structure is simple, the production cost is lower, and unnecessary units in the power tools can be reduced.

### BRIEF DESCRIPTION OF THE DRAWINGS

In order to more clearly illustrate the embodiments of the disclosure, the accompanying drawings for illustrating the technical solutions and the technical solutions of the disclosure are briefly described as below.
Fig. 1 is a perspective view of an electric module used in a power tool according to an embodiment the present invention;
Fig. 2 is a front view of the electric module of Fig. 1;
Fig. 3 is a lateral view of the electric module of Fig. 1;
Fig. 4 is a perspective view of the electric module of Fig. 1, wherein the battery assembly is removed from the battery chamber;
Fig. 5 is a lateral view of the electric module of Fig. 4;
Fig. 6 is a perspective view of the electric module of Fig. 4, wherein the top portion of the housing of the electric module is removed;
Fig. 7 is a lateral view of the electric module of Fig. 6;
Fig. 8 is a perspective view of a power tool comprising the electric module of Fig. 1;
Fig. 9 is a lateral view of the power tool of Fig. 8;
Fig. 10 is a perspective view of the power tool of Fig. 8, wherein the battery assembly is removed from the battery chamber;
Fig. 11 is a lateral view of the power tool of Fig. 10; and
Fig. 12 is a perspective view of the electric module in the power tool of Fig. 1, wherein the housing of the power housing is drawn as semitransparent.

### DETAILED DESCRIPTION

The following description with reference to the accompanying drawings is provided to clearly and completely explain the exemplary embodiments of the disclosure. It is apparent that the following embodiments are merely some embodiments of the disclosure rather than all embodiments of the disclosure. According to the embodiments in the disclosure, all the other embodiments attainable by those skilled in the art without creative endeavor belong to the protection scope of the disclosure.

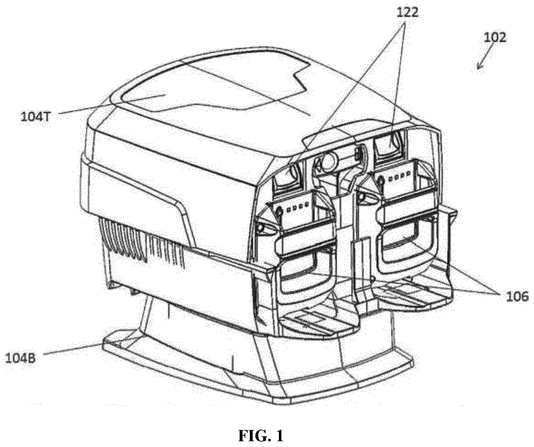

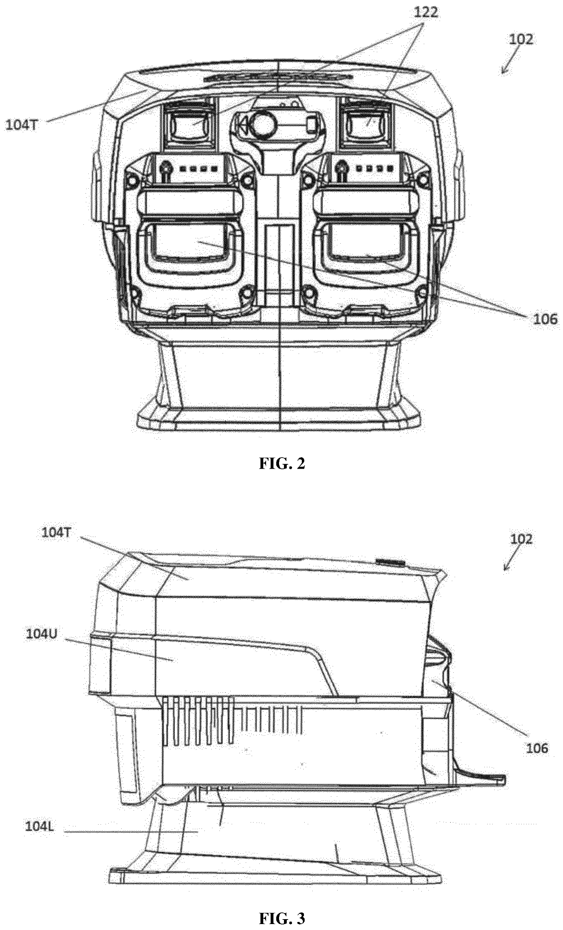

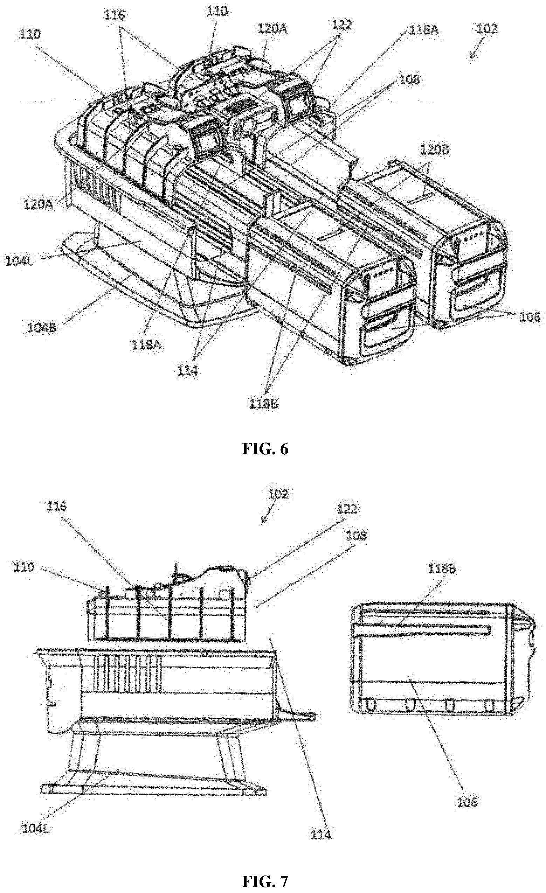

Referring to Figs. 1 to 7, the disclosure provides an electric module 102 used in a power tool 100. The electric module 102 comprises a housing 104 and an electrical connection terminal 110. The housing 104 defines a battery chamber 108 which at least partly accommodate a battery assembly 106. The electrical connection terminal 110 is disposed at the top portion 104T within the housing 104. The electrical connection terminal 110 is electrically connected with the battery assembly 106 accommodated in the battery chamber 108.

As shown in Figures 1 to 5, the electric module 102 comprises a housing 104 and the housing is roughly composed of a top housing 104U and a bottom housing 104L. The housing 104 is preferably made of plastic materials or other rigid materials, such that the housing 104 has certain strength so as to fix and protect elements/components, such as electrical cables and/or electrical connection terminals 110, disposed within the housing 104. The battery chamber 108 is defined between the top housing 104U and the bottom housing 104L. The battery chamber 108 is disposed such that one or more battery assemblies 106 is partly or entirely accommodated inside the battery chamber 108, such as the two battery assemblies 106 in Figs. 1 to 5. Alternatively, the housing 104 is integrally formed or is composed of other combinations/numbers of housings, and the housing 104 may define a substantial identical/similar battery chamber 108 so as to accommodate/receive one or more battery assemblies 106.

Preferably, the electric module 102 has an electrical connection terminal 110 disposed at the top portion 104T inside the housing 104. When the battery assembly 106 is accommodated inside the battery chamber 108, the battery assembly 106 is electrically connected with other components (such as electrical motors, charging circuits, switches, other battery assemblies and so forth) through the electrical connection terminal 110 and conductive wires 112/circuits, which are electrically connected with the electrical connection terminal 110. As shown in Figs. 1 to 7, the battery assembly 106 may be inserted to the battery chamber 108 through the battery chamber opening 114 of the housing 104, and the battery assembly 106 can be removed from the battery the chamber 108 through the battery chamber opening 114. When the battery assembly 106 is removed from the battery chamber 108 or the battery chamber 108 is empty, the battery chamber 108 is exposed to external through the battery chamber opening 114. According to the disclosure, foreign matters, such as water, scraps, leaves, grass clippings and so, may enter the battery chamber 108, which is exposed to the external, from the battery chamber opening 114.

Preferably, since the electrical connection terminal 110 is disposed at the top portion 104T within the housing 104, such as the abovementioned top housing 104U, the electrical connection terminal 110 is disposed at a higher position inside the battery chamber 108 (i.e. more distanced from the ground), and the foreign matters and/or accumulated water entering the battery chamber 108 is adhered to the surface which is closer to the ground, inside the battery chamber 108, such that the foreign matters substantially do not contact with the electrical connection terminal 110, which is disposed at a higher position. Thus, the housing 104 of the disclosure can prevent the water and/or foreign matters entering the battery chamber 108 form contacting with the electrical connection terminal 110, which is disposed at the top portion 104T inside the housing 104.

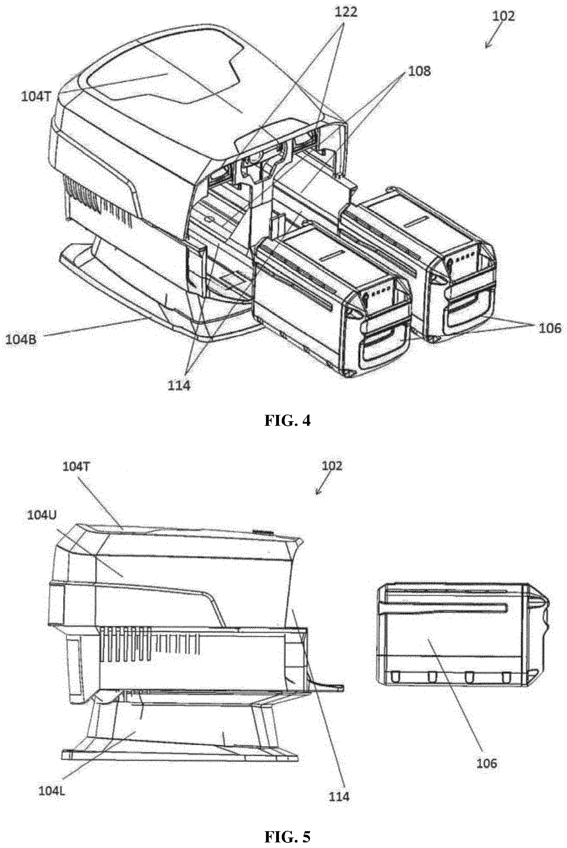

Referring to Figures 4 to 7, accordingly, the electric module 102 further comprises a battery frame 116. The battery frame 116 is disposed at the top portion 104T inside the housing 104. The battery frame 116 is arranged to fix the position of the battery assembly 106 accommodated in the battery chamber 108. For example, the battery frame 116 has a locking unit which can cooperates with the battery assembly 106 so as to selectively lock the relative position between the battery assembly 106 and the battery chamber 108/ battery frame 116. Optionally, the battery frame 116 comprises the electrical connection terminal 110, which is configured for electrically connected with the battery assembly 106. Since the battery frame 116 is disposed/assembled a the top portion 104T inside the housing 104 (such as the top housing 104U), the electrical connection terminal 110 disposed at the battery frame 116 is also disposed at the top portion 104T inside the housing 104, such that it may prevent the water and/or foreign matters entering the battery chamber 108 from contacting with the electrical connection terminal 110 disposed at the top portion 104T inside the housing 104.

In some exemplary embodiments, the battery frame 116 is disposed separately and fixes the battery assembly 106 to the electric module 102/ battery chamber 108. The battery frame 116 may include: a battery housing, a battery assembly fixing unit disposed on the battery housing, and an electrical connection terminal 110 electrically connected with a power component and a battery assembly 106 of a power tool 100. The battery assembly 106 has a battery fixing structure. When the battery assembly 106 is disposed at the battery frame 116, the battery assembly fixing unit is disposed for matching the battery assembly fixing structure for fixing the battery assembly 106 to the battery frame 116, and the battery assembly 106 is electrically connected with the power component of the power tool 100 by the electrical connection terminal 110.

Preferably, the battery frame 116 has a battery housing. Preferably, the battery housing is made of plastic materials or other materials having certain strengths. Preferably, the inner surface of the battery housing has a battery assembly fixing unit, comprising a rib structure 118A disposed at the lateral portion. The rib structure 118A is configured for cooperating with a groove structure 118B, which is disposed on a lateral surface of the battery assembly 106, for fixing the battery assembly 106 to the battery frame 116 so as to prevent the battery assembly 106 moving left and right/up and down relative to the battery frame 116, and it can ensure that the battery assembly 106 is assembled to a correct position on the battery frame 116 along a correct direction (i.e. the surface of the electrical connection terminal disposed at the battery assembly 106 which is farer to the ground). As shown in the figure, each of the two sides of the battery housing has a rib structure 118A configured for cooperating with the groove structure 118B disposed on the two lateral surfaces of the battery housing. Alternatively, the battery frame 116 has a groove structure corresponding to a rib structure disposed at the battery assembly 106. Optionally, the battery frame 116 and the battery assembly 106 can have different numbers of rib/groove structures at corresponding positions. Preferably, the rib structure 118A and the battery housing are integrally formed, and alternatively, the rib structure 118A is disposed on the surface of the battery housing by other combination means.

Preferably, the battery housing has an assembly hole. The assembly hole is configured for cooperating with a fastener, such as a screw and so forth, so as to assemble the battery frame 116 to the housing 104 of the electric module 102. Alternatively, the battery frame 116 is fixed/assembled to the housing 104 of the power tool 100/electric module 102 by other fastening means. The battery hosing and the housing 104 of the electric module 102 can be integrally formed.

Preferably, the electrical connection terminal 110 has more than one metal sheets, which have the shape corresponding to the connecting terminal which needs to be connected with the battery assembly 106. For example, the connecting terminal has 4 metal sheets corresponding to the metal clips of power (+), power (-), information (+) and information (-) of the battery assembly 106 respectively. In addition, the connecting terminal is electrically connected with the power component, the conductive wire 112/circuit or other components (such as electrical motors, charging circuits, switches, other battery assemblies 106 and so forth) in the power tool 100 by, for example, welding.

Preferably, the battery assembly 106 fixing unit further comprises a bolt 120A. When the battery assembly 106 is disposed at the battery frame 116, the bolt 120A cooperates with the lock slot 120B of the battery assembly 106 so as to fix the battery assembly 106 to the battery frame 116 and to prevent the battery assembly 106 from moving back and forth corresponding to the battery frame 116. Optionally, the battery assembly 106 fixing unit further comprises an actuating unit 122. When the actuating unit 122 is pressed, the locking status caused by the bolt 120A of the battery frame 116 and the lock slot 120B of the battery assembly 106 will be relieved and the battery assembly 106 is allowed to be removed from the battery frame 116/battery chamber 108.

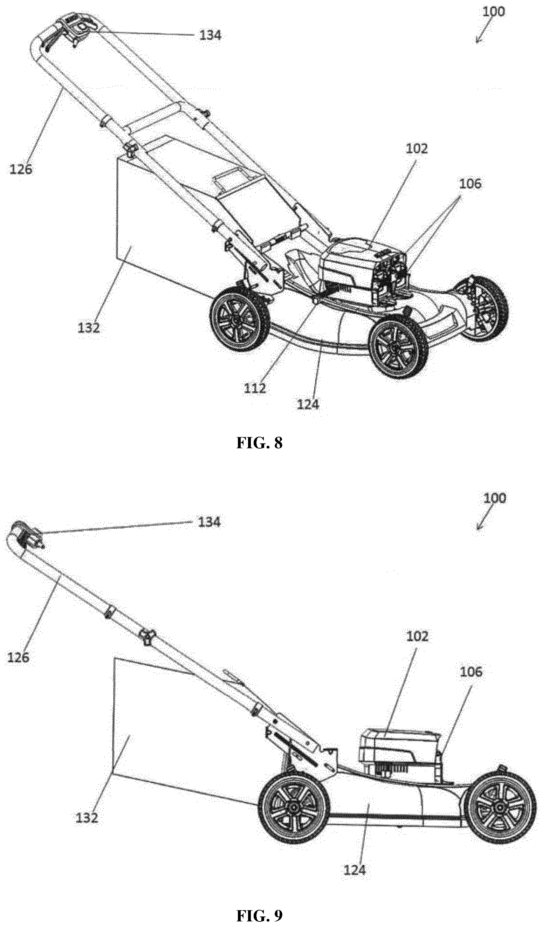

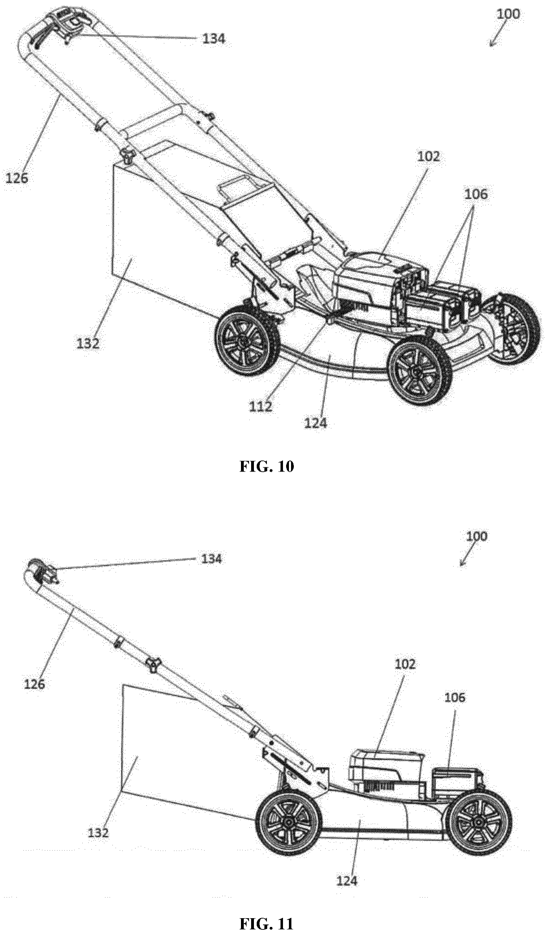

The disclosure further provides a power tool 100 having the above described electric module 102. Referring to Figs. 8 to 11, the power tool 100 is at least one of a lawn mower, a cropper, a grass mower, a weeder, a portable cropper and a self-propelled mower, alternatively, any one of an outdoor power tool or a gardening power tool. For example, the power tool 100 has a chassis 124 used for moving on the ground/lawn, a handle 126 for the user to hold, a blade 128 used for mowing, an electrical motor 130 for driving a rotational blade, a debris collecting room/bag and so, which is a general design of a portable cropper or a self-propelled mower. The electric module 102 is disposed at the chassis 124, the battery chamber opening 114 is opened towards a direction parallel to the operation surface of the power tool 100 (i.e. parallel to the surface where the power tool 100 moves). The electric module 102 is electrically connected with different components, such as electrical motors 130, charging circuits, switches 134 and so forth, of the power tool 100 by conductive wires 112.

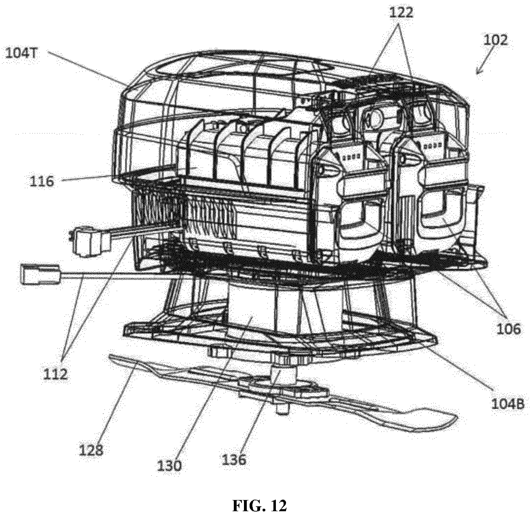

Referring to Fig. 12, the electrical motor 130 is partly accommodated inside the housing 104 of the electric module 102, for example, the bottom portion 104B of the housing 104 is connected with the blade 128, which is used for mowing, by the extended shaft 136. The assembly of the electric module 102, the electrical motor 130 and the blade 128 can be entirely disposed at the chassis 124 of the power tool 100.

When the user operates the power tool 100, the user may first examine that whether there are foreign matters or accumulated water entering the battery chamber 108 through the battery chamber opening 114 and they can remove the foreign matters and accumulated water. Then, the user may insert the battery assembly 106 into the battery chamber 108 horizontally through the battery chamber opening 114 and fixes the battery assembly 106 to the battery chamber 108 by the battery assembly fixing unit of the battery frame 116. Thus, the battery assembly 106 is electrically connected with the switch 134 disposed at the handle 126 of the power tool 100 by the electrical connection terminal 110, which is disposed at the top portion 104T inside the housing 104 of the electric module 102. When the user actuates the switch 134, the battery assembly 106 is electrically connected with different power components of the power tool 100 and activates the power tool 100. When the user needs to remove the battery assembly 106 from the power tool 100, the user may press the actuating unit 122 at the battery frame 116 so as to relieve the locking status and they can remove the battery assembly 106.

Advantageously, the electrical connection terminal 110 is disposed at the top portion 104T inside the housing 104 of the electric module 102, such that the water and/or foreign matters entering the battery chamber through the battery chamber opening 114 substantially do not contact with the electrical connection terminal 110 disposed at the top portion 104T. Thus, the battery chamber 108 is allowed to expose to external through the battery chamber opening 114 without including additional waterproof/enclosed units for preventing water and/or foreign matters entering the battery chamber 108 and contacting with the electrical connection terminal 110 disposed inside the battery chamber 108. The design makes the structure of the electric module 102 simpler, the production cost is low, and unnecessary components/units in the power tool 100 are reduced.

Note that the specifications relating to the above embodiments should be construed as exemplary rather than as limitative of the present disclosure. The equivalent variations and modifications on the structures or the process by reference to the specification and the drawings of the disclosure, or application to the other relevant technology fields directly or indirectly should be construed similarly as falling within the protection scope of the disclosure.

## Claims

1. An electric module (102) for use in a power tool (100), comprising:
a housing (104) defining a battery chamber (108) arranged to at least partly accommodate a battery assembly (106); and
an electrical connection terminal (110) arranged within the housing (104) to electrically connect with the battery assembly (106) accommodated in the battery chamber (108);
wherein the battery assembly (106) is arranged to be inserted into the battery chamber (108) via a battery chamber opening (114) defined by the housing (104);
**characterized in that** the electrical connection terminal (110) is disposed at a top portion within the housing (104).

2. The electric module (102) according to claim 1, wherein when the battery chamber (108) is empty, the battery chamber (108) is exposed to an external environment through the battery chamber opening (114).

3. The electric module (102) according to claim 1, wherein the electric module (102) further comprises a battery frame (116), the battery frame (116) is disposed at the top portion (104) within the housing (104), and the battery frame (116) is arranged to fix a position of the battery assembly (106) accommodated in the battery chamber (108).

4. The electric module (102) according to claim 3, wherein the battery frame comprises the electrical connection terminal (110).

5. The electric module (102) according to claim 3, wherein the housing (104) comprises a top housing (104 U) and a bottom housing (104 L), and wherein the battery frame (116) is assembled at the top housing (104 U) so as to provide the electrical connection terminal (110) at a top portion within the housing (104).

6. The electric module (102) according to claim 5, wherein the battery frame (116) comprises an assembly hole which cooperate with a fastener for fixing the battery frame (116) to the housing (104).

7. The electric module (102) according to claim 3, wherein the battery frame (116) has a battery housing, wherein an inner surface of the battery housing has a battery assembly fixing unit, comprising a rib structure (118A), which is configured for cooperating with a groove structure (118B), which is disposed on a lateral surface of the battery assembly (106).

8. The electric module (102) according to claim 7, wherein the battery assembly fixing unit further comprises a bolt (120A) which cooperates with a lock slot (120B) of the battery assembly (106) to fix the battery assembly (106) to the battery frame (116).

9. The electric module (102) according to claim 8, wherein the battery assembly fixing unit further comprises an actuating unit (122), and when the actuating unit (122) is pressed, a locking status caused by the bolt (120A) and the lock slot (120B) will be relieved.

10. The electric module (102) according to claim 1, wherein the battery assembly (106) comprises one or more battery assemblies (106).

11. A power tool (100) comprising an electric module (102) in accordance with any one of claims 1 to 10.

12. The power tool (100) according to claim 11, wherein the power tool (100) is an outdoor power tool and/or a gardening tool.

13. The power tool (100) according to claim 11, wherein the power tool (100) is at least one of a lawn mower, a cropper, a grass mower, a weeder, a portable cropper and a self-propelled mower.
